# FASCICULE DE BREVET EUROPEEN

(11) **EP 3 400 145 B1**
(45) Date de publication et mention de la délivrance du brevet: **12.08.2020**
(21) Numéro de dépôt: 16826426.5
(22) Date de dépôt: 21.12.2016
(51) Int. Cl.: B60J 5/06, B60R 13/02

(54) **CACHE POUR BRAS DE CHARIOT DE GUIDAGE DE PORTE COULISSANTE DE VÉHICULE AUTOMOBILE**
HEBEL FÜR SCHIEBETÜR TRAGWAGEN FÜR EINEN KRAFTFAHRZEUG
HANDLE FOR SLIDING DOOR CARRIER FOR A VEHICLE

(30) Priorité: 07.01.2016 FR 1650119
(43) Date de publication de la demande: 14.11.2018
(73) Titulaire: PSA AUTOMOBILES S.A., 78300 Poissy (FR)
(72) Inventeur: DUVEAU, Christophe, 91310 Linas (FR)
(86) Numéro de dépôt international: PCT/FR2016/053596
(87) Numéro de publication internationale: WO 2017/118787

(56) Documents cités:
- FR-A1- 2 801 251
- US-A1- 2014 265 430

## Description

L'invention a trait au domaine des ouvrants de véhicule automobile. Plus particulièrement l'invention a trait aux portes latérales coulissantes.

Une porte latérale coulissante de véhicule automobile comprend généralement des chariots de guidage sur le côté du véhicule. Des chariots supérieur et inférieur sont généralement fixés aux bords supérieur et inférieur de la porte coulissante, et un chariot central est fixé à une position intermédiaire entre les bords supérieur et inférieur. Dans la configuration d'une porte coulissante de l'avant vers l'arrière du véhicule, les chariots supérieur et inférieur sont généralement fixés à l'avant de la porte et le chariot central est fixé à l'arrière de la porte. Lors de la manœuvre de la porte coulissante, le chariot central guide la porte sur un rail de guidage réalisé sur le flan latéral de la carrosserie du véhicule. Le chariot comprend généralement un bras pivotant de fixation à la porte et la cinématique de l'ouverture de la porte dépend principalement de la géométrie du bras et de la forme du rail. Cette réalisation est généralement contraignante ; par exemple le faible espace disponible limite la longueur du bras ce qui ne permet pas toujours une cinématique bien adaptée.

Le document de brevet FR 2 801 251 B1 divulgue un système de coulissement d'une porte coulissante sur une carrosserie de véhicule utilitaire. Le système de coulissement comprend un cache fixé sur la paroi extérieure de la porte, de manière à couvrir le chariot monté pivotant sur la porte et coulissant le long d'un rail sur la carrosserie. Le cache est destiné à empêcher l'introduction de corps étrangers sur le rail en vue d'assurer le bon coulissement de la porte. Il protège par incidence également le chariot et son bras de fixation à la porte.

Le document de brevet FR 2 925 453 B1 divulgue un véhicule automobile avec une porte coulissante sur chariots. Les chariots sont mobiles sur trois ensembles de guidage de la carrosserie. L'invention consiste en la réalisation d'un logement renforcé d'un des chariots. Le logement se situe au niveau d'un longeron de bas de caisse du véhicule, et le logement renforcé est destiné à renforcer la structure du véhicule en cas de choc. Le document de brevet US 2014/0265430 divulgue un autre véhicule automobile avec une porte coulissante sur chariots.

L'invention a pour objectif de proposer une solution palliant au moins l'un des inconvénients de l'état de l'art, en particulier de l'état de l'art susmentionné. Plus particulièrement, l'invention a pour objectif de proposer une solution pour faciliter la réalisation d'une porte coulissante de véhicule automobile, notamment au niveau de la cinématique de ses mouvements d'ouverture et de fermeture.

L'invention a pour objet un cache pour bras de chariot de porte latérale coulissante de véhicule automobile, comprenant une paroi formant une cavité avec une ouverture, remarquable en ce que la cavité forme une gaine apte à recevoir, au travers de l'ouverture, un bras pivotant du chariot, et en ce que la paroi comprend, au niveau de ladite ouverture, des moyens de fixation à une ouverture correspondante dans la doublure de la porte.

Selon des modes particuliers de réalisation, le protecteur de chariot peut comprendre l'une ou plusieurs des caractéristiques suivantes, prises isolément ou selon toutes les combinaisons techniquement possibles :
- la cavité présente un profil généralement courbé de manière à permettre au fond de la cavité d'être également fixé à la doublure ;
- les moyens de fixation de la paroi sont des moyens par clippage au bord de l'ouverture correspondante dans la doublure ;
- le fond de la cavité est configurée pour recevoir le bras de chariot en vue de la fixation dudit bras à la porte ;
- la paroi comprend, au fond de la cavité, au moins un passage pour une ou plusieurs vis de fixation du bras à la doublure de porte ;
- la paroi comprend une première partie rigide, préférentiellement métallique, formant le fond de la cavité et une deuxième partie souple, préférentiellement en matière plastique, s'étendant de la première partie jusqu'à l'ouverture ;
- la première partie rigide comprend une plaque métallique et la deuxième partie souple est surmoulée ou clippée sur ladite plaque ;
- la première partie rigide est en plastique ;
- la deuxième partie souple est en caoutchouc ;
- le cache est configuré pour assurer une fixation étanche au ruissèlement d'eau entre l'ouverture de la paroi et l'ouverture correspondante de la doublure ;
- le cache comprend à l'ouverture une rainure de fixation au bord de l'ouverture correspondante dans la doublure ;
- le cache comprend à l'ouverture une lèvre d'étanchéité en caoutchouc apte à être liée le long de l'ouverture correspondante dans la doublure ;
- la paroi est de section transversale moyenne comprise entre 10cm² et 200cm² au niveau de l'ouverture, préférentiellement entre 20cm² et 150cm², plus préférentiellement entre 30cm² et 100cm² ;
- la paroi est de section transversale se réduisant en s'éloignant de l'ouverture ;
- la paroi est généralement souple et comprend une armature rigide de fixation au fond de la cavité et/ou à l'ouverture ;
- le cache est venue par surmoulage de matière plastique sur la ou au moins une des armatures rigides de fixation.

L'invention a également pour objet une porte latérale coulissante de véhicule automobile, comprenant : une paroi extérieure ; une doublure s'étendant à distance de la paroi extérieure de manière à former un volume intérieur ; un bras de chariot de guidage de la porte, fixé à la doublure ; un cache du bras de chariot de guidage ; remarquable en ce que le cache est conforme à l'invention et est logé dans le volume intérieur avec son ouverture fixée à une ouverture correspondante formée dans la doublure.

Selon des modes particuliers de réalisation, la porte latérale coulissante peut comprendre l'une ou plusieurs des caractéristiques suivantes, prises isolément ou selon toutes les combinaisons techniquement possibles :
- le bras de chariot est fixé sur la face intérieure de la doublure au travers de la paroi du cache ;
- la doublure comprend une portion centrale généralement parallèle à la paroi extérieure et une portion latérale inclinée par rapport à la portion centrale et formant un bord arrière du volume intérieur de la porte, l'ouverture correspondante étant formée dans la portion latérale inclinée de la doublure et le bras de chariot étant fixé à la portion centrale de la doublure ;
- l'ouverture correspondante dans la doublure est également formée dans la portion centrale de la doublure, préférentiellement à moins de 40%, plus préférentiellement encore à moins de 30% ;
- le chariot est fixé à la portion centrale de la doublure, à distance de l'ouverture correspondante ;
- le bras de chariot de guidage comprend au niveau de sa fixation à la doublure une liaison pivotante ;
- le bras de chariot est un bras de chariot central à une hauteur intermédiaire de la porte ;

L'invention a également pour objet un véhicule automobile comprenant une porte latérale coulissante et un rail de guidage de ladite porte ; remarquable en ce que la porte est conforme à l'invention.

Les mesures de l'invention sont intéressantes en ce qu'elles facilitent la réalisation de la porte coulissante d'un véhicule automobile. En effet, la porte comprend un bras de chariot de guidage intrusif dans le volume intérieur et un cache du bras adapté pour l'isolation du bras. Le bras peut être réalisé en cohérence avec une cinématique adaptée de la porte.

D'autres caractéristiques et avantages de la présente invention seront mieux compris à l'aide de la description et des dessins parmi lesquels :
- La figure 1 est une vue de côté d'un véhicule automobile conforme à l'invention comprenant une porte coulissante conforme à l'invention ;
- La figure 2 est une vue en coupe horizontale du cache du bras de chariot conforme à l'invention de la porte coulissante du véhicule automobile de la figure 1 ;

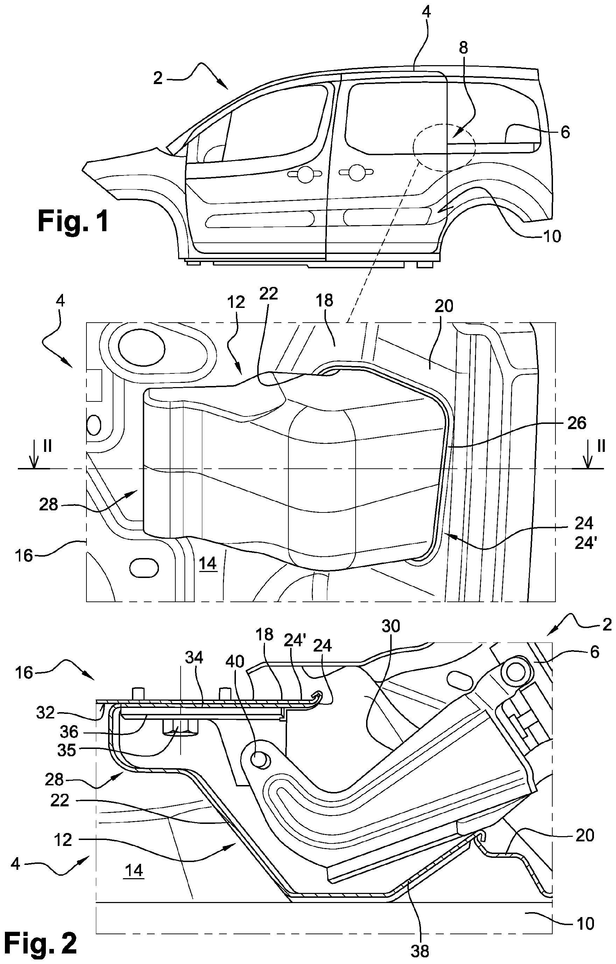

La figure 1 est une vue d'un véhicule automobile 2 conforme à l'invention. Le véhicule automobile comprend une carrosserie et une porte latérale coulissante 4 sur la carrosserie. Il comprend des chariots de guidage de la porte sur la carrosserie. Les chariots peuvent être fixés dans le bas, le haut et à une hauteur intermédiaire de la porte. A une hauteur intermédiaire, le véhicule automobile comprend un rail de guidage 6 recevant un chariot de guidage fixé sur l'arrière de la porte via un bras de chariot de guidage 8. La porte 4 comprend une paroi extérieure 10 et une doublure. La doublure s'étend du côté de l'habitacle du véhicule à distance de la paroi extérieure de manière à former un volume intérieur de la porte. On peut parler en d'autres termes du caisson de la porte formant le volume intérieur de la porte. Le bras de chariot de guidage de la porte est pivotant, intrusif dans le volume intérieur de la porte et fixé à la doublure de la porte coulissante. Le véhicule automobile comprend, enfin un cache du bras de chariot de guidage conforme à l'invention.

Nous nous attachons dans le paragraphe suivant à décrire l'image agrandie de la figure 1 présentant le cache 12 du bras de chariot de la porte latérale coulissante 4 conforme à l'invention. Il est bon de noter que la paroi extérieure de la porte n'est pas représentée sur l'image agrandie de sorte à voir le cache 12, ce dernier est en effet logé dans le volume intérieur 14 du caisson de la porte pour recevoir le bras de chariot. Ce dernier est situé sous le cache sur l'image, il n'est donc pas visible, nous pouvons cependant voir le bras de chariot reçu par le cache en référence à la figure 2, il est fixé sur la face intérieure de la doublure de la porte.

On peut voir sur l'image agrandie de la figure 1 la doublure 16 de la porte latérale coulissante 4. Elle comprend une portion centrale 18 généralement parallèle à la paroi extérieure (non représentée) et une portion latérale inclinée 20 par rapport à la portion centrale et formant un bord arrière du volume intérieur 14 de la porte. On peut voir le cache 12 du bras du chariot conforme à l'invention et qui est logé dans le volume intérieur 14 de la porte. Le cache comprend une paroi 22 qui forme une cavité avec une ouverture 24 ; la cavité est de la forme d'une gaine qui reçoit, au travers de l'ouverture 24, le bras pivotant du chariot (non visible). Le cache 12 comprend au niveau de l'ouverture, des moyens de fixation 26 à une ouverture correspondante 24' dans la doublure de porte. En particulier, la cavité présente un profil généralement courbé de manière à permettre au fond 28 de la cavité d'être également fixé à la doublure. En particulier, on peut voir que l'ouverture correspondante 24' de la doublure est formée dans la portion latérale inclinée 20 de la doublure. L'ouverture 24 du cache 12 correspond à une zone d'entrée du bras de chariot de guidage, elle est située à une première extrémité de la cavité. La zone d'entrée de la cavité peut être fixée de manière étanche à l'ouverture de la doublure 24'. En particulier, la zone d'entrée peut comprendre une lèvre d'étanchéité qui est appliquée le long de l'ouverture correspondante de la doublure. Cette mesure est intéressante en ce que la liaison étanchéifiée entre la première extrémité de la cavité et l'ouverture dans le caisson de porte évite l'infiltration d'eau dans ledit caisson. La fixation étanche du cache à l'ouverture peut également aider à réduire la propagation d'ondes sonores de l'extérieur de l'ouverture jusque dans l'habitacle quand la porte est en position fermée. La lèvre d'étanchéité peut être en caoutchouc. En particulier, les moyens de fixation 26 du cache 12 à la doublure 16 peuvent être des moyens par clippage au bord de l'ouverture correspondante 24' dans la doublure. En alternative, la zone d'entrée peut comprendre une rainure de fixation à insérer le long du bord de l'ouverture. Le cache peut être en plastique ou en caoutchouc, il peut être généralement souple et comprendre une armature rigide au niveau de la zone d'entrée du bras de chariot coulissant. Il peut, à titre d'exemple, être venu de matière caoutchouc surmoulée sur l'armature rigide en question. Ces différents moyens de fixation de la paroi à l'ouverture correspondante de la doublure sont intéressants par leur variété selon le mode de réalisation du véhicule. On peut distinguer le fond 28 de la cavité à l'extrémité opposée de la cavité par rapport à l'ouverture, qui est configurée pour recevoir le bras de chariot pour sa fixation à la doublure. Le cache comprend au niveau du fond de la cavité une zone de sortie d'une portion du bras. Cette zone de sortie est liée au bras de chariot à distance de l'ouverture.

La figure 2 est une vue en coupe horizontale du cache 12 de bras de chariot conforme à l'invention de la porte coulissante 4 du véhicule automobile 2. Il est à noter que la porte coulissante est en position fermée sur le véhicule automobile. La doublure de porte 16 est sur le haut de l'image avec la portion centrale 18 et la portion latérale inclinée 20, la face extérieure 10 de la porte est sur le bas de l'image. On peut voir à droite de l'image le chariot apte à coulisser sur le rail de guidage 6 du véhicule automobile. On distingue le caisson de la porte coulissante formé par la doublure et la paroi extérieure, le bras de chariot de guidage 30 étant intrusif dans le caisson via l'ouverture 24' dans la doublure, et le cache 12 du bras de chariot est logé dans le volume intérieur 14 du caisson. On peut observer le cache dont la paroi forme une cavité avec son ouverture 24 pour l'entrée du bras pivotant qui est fixée à l'ouverture correspondante 24' de la doublure. On peut voir à gauche de l'image le bras de chariot 30 fixé, à distance de l'ouverture du cache, à la portion centrale de la doublure. L'extrémité du bras de chariot est fixée sur la face intérieure 32 de la doublure ; le bras est en l'occurrence fixé à la doublure, au travers de la paroi 22 du cache au fond 28 de la cavité. La portion centrale 18 de la doublure comprend en l'occurrence deux orifices de fixation du bras à la doublure, et la paroi comprend, au fond de la cavité, un passage 34 pour des vis de fixation du bras dans la doublure via ces orifices. La paroi du cache peut comprendre une première partie rigide 36 formant le fond de la cavité. Les vis de fixation du bras peuvent prendre appui sur cette première partie rigide. La partie rigide est en l'occurrence une plaque métallique. Cette mesure de l'invention est intéressante en ce que la fixation du bras à la doublure via la plaque métallique est stable. La paroi peut comprendre une deuxième partie souple 38 qui peut être en plastique et qui peut s'étendre de la première partie rigide jusqu'à l'ouverture. La deuxième partie peut être surmoulée ou bien clippée à la partie rigide. Cette mesure de l'invention est intéressante pour la mise en place du cache en forme de gaine dans le volume intérieur de la porte coulissante.

Le bras 30 de chariot de guidage comprend au niveau de sa fixation à la doublure 16 une liaison pivotante 40. Il est bon de noter que le débattement du bras est plus réduit au niveau de sa fixation et plus important au niveau de l'ouverture par laquelle il s'étend à l'extérieur de la porte. Il est bon aussi de noter que le bras de chariot est fixé à son extrémité sur la portion centrale de la doublure et à distance de l'ouverture située sur la portion latérale. On peut voir que la paroi du cache est de section transversale s'accroissant en s'écartant de la fixation du bras à la doublure. Cette mesure de l'invention est intéressante en ce que la section de la paroi du cache est adaptée au pivotement du bras de chariot lors de l'ouverture ou la fermeture de la porte coulissante. Il est aussi à noter qu'en l'occurrence moins de 50% de la section de l'ouverture de la paroi du cache est formée sur la portion centrale de la doublure, préférentiellement moins de 40%, plus préférentiellement moins de 30%, le reste de la section étant formée sur la portion latérale inclinée de la doublure. Cette mesure est intéressante en ce que cette proportion peut être ajustée pour une cinématique adaptée du mouvement du bras du chariot. Enfin l'ouverture 24 dans la cavité au niveau de la zone d'entrée du bras est de section moyenne comprise entre 10cm² et 200cm², préférentiellement entre 20cm² et 150cm², plus préférentiellement entre 30cm² et 100cm². Cette mesure est aussi intéressante pour une cinématique du bras de chariot adaptée lors du guidage de la porte coulissante.

## Revendications

1. Cache (12) pour bras (30) de chariot de porte latérale coulissante (4) de véhicule automobile (2), comprenant une paroi (22) formant une cavité avec une ouverture (24), **caractérisé en ce que** :
la cavité forme une gaine apte à recevoir, au travers de l'ouverture (24), un bras pivotant (30) du chariot, et **en ce que** la paroi (22) comprend, au niveau de ladite ouverture, des moyens de fixation (26) à une ouverture correspondante (24') dans la doublure (16) de la porte.

2. Cache (12) selon la revendication 1, **caractérisé en ce que** la cavité présente un profil généralement courbé de manière à permettre au fond (28) de la cavité d'être également fixé à la doublure (16).

3. Cache (12) selon l'une des revendications 1 et 2, **caractérisé en ce que** les moyens de fixation (26) de la paroi (22) sont des moyens par clippage au bord de l'ouverture correspondante (24') dans la doublure (16).

4. Cache (12) selon l'une des revendications 1 à 3, **caractérisé en ce que** la paroi (22) comprend, au fond (28) de la cavité, au moins un passage (34) pour une ou plusieurs vis de fixation (35) du bras à la doublure (16) de porte.

5. Cache (12) selon les revendications 1 à 4, **caractérisé en ce que** la paroi (22) comprend une première partie rigide (36), préférentiellement métallique, formant le fond (28) de la cavité et une deuxième partie souple (38), préférentiellement en matière plastique, s'étendant de la première partie (36) jusqu'à l'ouverture (24).

6. Porte latérale coulissante (4) de véhicule automobile (2), comprenant :
- une paroi extérieure (10) ;
- une doublure (16) s'étendant à distance de la paroi extérieure (10) de manière à former un volume intérieur (14) ;
- un bras de chariot de guidage (30) de la porte, fixé à la doublure (16) ;
- un cache (12) du bras de chariot de guidage ;
**caractérisée en ce que** le cache (12) est conforme à l'une des revendications 1 à 5 et est logé dans le volume intérieur (14) avec son ouverture (24) fixée à une ouverture correspondante (24') formée dans la doublure (16).

7. Porte latérale coulissante (4) selon la revendication 6, **caractérisée en ce que** le bras de chariot (30) est fixé sur la face intérieure (32) de la doublure (16) au travers de la paroi (22) du cache (12).

8. Porte latérale coulissante (4) selon la revendication 7, **caractérisée en ce que** la doublure (16) comprend une portion centrale (18) généralement parallèle à la paroi extérieure (10) et une portion latérale (20) inclinée par rapport à la portion centrale et formant un bord arrière du volume intérieur de la porte, l'ouverture correspondante (24') étant formée dans la portion latérale inclinée de la doublure et le bras de chariot (30) étant fixé à la portion centrale (18) de la doublure.

9. Porte latérale coulissante (4) selon l'une des revendications 6 à 8, **caractérisée en ce que** le bras de chariot de guidage (30) comprend au niveau de sa fixation à la doublure (16) une liaison pivotante (40).

10. Véhicule automobile (2) comprenant une porte latérale coulissante (4) et un rail de guidage (6) de ladite porte ; **caractérisé en ce que** la porte est conforme à l'une des revendications 6 à 9.

## Patentansprüche

1. Abdeckung (12) für den Arm (30) eines seitlichen Schiebetürschlittens (4) eines Kraftfahrzeugs (2), mit einer Wand (22), die einen Hohlraum mit einer Öffnung (24) bildet, **dadurch gekennzeichnet, dass** :
der Hohlraum eine Hülle bildet, die geeignet ist, durch die Öffnung (24) hindurch einen Schwenkarm (30) des Wagens aufzunehmen, und dass die Wand (22) auf Höhe der Öffnung Mittel (26) zur Befestigung an einer entsprechenden Öffnung (24') der Verkleidung (16) der Tür aufweist.

2. Abdeckung (12) nach Anspruch 1, **dadurch gekennzeichnet, dass** der Hohlraum ein allgemein gekrümmtes Profil aufweist, so dass der Boden (28) des Hohlraums auch an der Verkleidung (16) befestigt werden kann.

3. Abdeckung (12) nach einem der Ansprüche 1 und 2, **dadurch gekennzeichnet, dass** die Befestigungsmittel (26) der Wand (22) Einrastmittel am Rand der entsprechenden Öffnung (24') in der Verkleidung (16) sind.

4. Abdeckung (12) nach einem der Ansprüche 1 bis 3, **dadurch gekennzeichnet, dass** die Wand (22) am Boden (28) des Hohlraums mindestens einen Durchgang (34) für eine oder mehrere Schrauben (35) zur Befestigung des Arms an der Türverkleidung (16) aufweist.

5. Abdeckung (12) nach den Ansprüchen 1 bis 4, **dadurch gekennzeichnet, dass** die Wand (22) einen ersten starren, vorzugsweise metallischen Teil (36), der den Boden (28) des Hohlraums bildet, und einen zweiten flexiblen Teil (38), vorzugsweise aus Kunststoff, umfasst, der sich von dem ersten Teil (36) bis zur Öffnung (24) erstreckt.

6. Seitenschiebetür (4) eines Kraftfahrzeugs (2), umfassend :
- eine Außenwand (10);
- eine Auskleidung (16), die sich in einem Abstand von der Außenwand (10) erstreckt, so dass sie ein Innenvolumen (14) bildet;
- einem Türführungsschlittenarm (30), der an der Auskleidung (16) befestigt ist;
- eine Abdeckung (12) für den Führungsschlittenarm;
**dadurch gekennzeichnet, dass** die Abdeckung (12) einem der Ansprüche 1 bis 5 entspricht und in dem Innenvolumen (14) untergebracht ist, wobei ihre Öffnung (24) an einer entsprechenden Öffnung (24') befestigt ist, die in der Auskleidung (16) ausgebildet ist.

7. Seitliche Schiebetür (4) nach Anspruch 6, **dadurch gekennzeichnet, dass** der Schlittenarm (30) an der Innenfläche (32) der Verkleidung (16) durch die Wand (22) der Abdeckung (12) hindurch befestigt ist.

8. Seitenschiebetür (4) nach Anspruch 7, **dadurch gekennzeichnet, dass** die Auskleidung (16) einen mittleren Abschnitt (18), der im Allgemeinen parallel zur Außenwand (10) verläuft, und einen Seitenabschnitt (20) umfasst, der in Bezug auf den mittleren Abschnitt geneigt ist und eine Hinterkante des Innenvolumens der Tür bildet, wobei die entsprechende Öffnung (24') in dem geneigten Seitenabschnitt der Auskleidung ausgebildet ist und der Wagenarm (30) an dem mittleren Abschnitt (18) der Auskleidung befestigt ist.

9. Seitenschiebetür (4) nach einem der Ansprüche 6 bis 8, **dadurch gekennzeichnet, dass** der Führungsschlittenarm (30) an seiner Befestigung an der Verkleidung (16) eine Schwenkverbindung (40) aufweist.

10. Kraftfahrzeug (2) mit einer seitlichen Schiebetür (4) und einer Führungsschiene (6) für diese Tür; **dadurch gekennzeichnet, dass** die Tür einem der Ansprüche 6 bis 9 entspricht.

## Claims

1. A cover (12) for the arm (30) of a sliding side door carriage (4) of a motor vehicle (2), comprising a wall (22) forming a cavity with an opening (24), **characterised in that** :
the cavity forms a sheath capable of receiving, through the opening (24), a pivoting arm (30) of the carriage, and **in that** the wall (22) comprises, at the level of said opening, means (26) for fixing to a corresponding opening (24') in the lining (16) of the door.

2. A cover (12) according to claim 1, **characterized in that** the cavity has a generally curved profile so as to enable the bottom (28) of the cavity to be also fixed to the lining (16).

3. A cover (12) according to one of claims 1 and 2, **characterized in that** the fastening means (26) of the wall (22) are clipping means at the edge of the corresponding opening (24') in the lining (16).

4. Cover (12) according to one of claims 1 to 3, **characterized in that** the wall (22) comprises, at the bottom (28) of the cavity, at least one passage (34) for one or more screws (35) for fixing the arm to the door lining (16).

5. Cover (12) according to claims 1 to 4, **characterized in that** the wall (22) comprises a first rigid, preferably metallic, part (36) forming the bottom (28) of the cavity and a second flexible part (38), preferably made of plastic, extending from the first part (36) to the opening (24).

6. Sliding side door (4) of a motor vehicle (2), comprising :
- an outer wall (10);
- a liner (16) extending at a distance from the outer wall (10) so as to form an inner volume (14);
- a door guide carriage arm (30) fixed to the liner (16);
- a cover (12) for the guide carriage arm;
**characterised in that** the cover (12) conforms to one of claims 1 to 5 and is accommodated in the inner volume (14) with its opening (24) fixed to a corresponding opening (24') formed in the lining (16).

7. Sliding side door (4) according to claim 6, **characterised in that** the carriage arm (30) is fixed to the inner face (32) of the lining (16) through the wall (22) of the cover (12).

8. Sliding side door (4) according to claim 7, **characterized in that** the liner (16) comprises a central portion (18) generally parallel to the outer wall (10) and a side portion (20) inclined with respect to the central portion and forming a rear edge of the interior volume of the door, the corresponding opening (24') being formed in the inclined side portion of the liner and the carriage arm (30) being fixed to the central portion (18) of the liner.

9. Sliding side door (4) according to one of claims 6 to 8, **characterised in that** the guide carriage arm (30) comprises a pivot connection (40) at its attachment to the lining (16).

10. Motor vehicle (2) comprising a sliding side door (4) and a guide rail (6) for said door; **characterised in that** the door comprises with one of claims 6 to 9.
